# EUROPEAN PATENT SPECIFICATION

(11) **EP 4 189 239 B1**
(45) Date of publication and mention of the grant of the patent: **28.01.2026**
(21) Application number: 21749237.0
(22) Date of filing: 03.08.2021
(51) Int. Cl.: F03D 13/10

(54) **A SYSTEM AND METHOD FOR TRANSPORTING A WIND TURBINE TOWER**
SYSTEM UND VERFAHREN ZUM TRANSPORT EINES WINDTURBINENTURMS
SYSTÈME ET PROCÉDÉ DE TRANSPORT D'UNE TOUR DE TURBINE ÉOLIENNE

(30) Priority: 03.08.2020 EP 20189247
(43) Date of publication of application: 07.06.2023
(73) Proprietor: Ørsted Wind Power A/S, 7000 Fredericia (DK)
(72) Inventor: DELAMORE, David, 2920 Gentofte (DK); FRENDESEN, Ernst, 7000 Fredericia Skaerbaek (DK)
(74) Representative: Lewis Silkin LLP
(86) International application number: PCT/EP2021/071656
(87) International publication number: WO 2022/029116

(56) References cited:
- EP-A1- 3 090 171
- WO-A2-2019/103611
- GB-A- 2 407 114
- US-A1- 2011 123 274
- US-A1- 2020 023 923
- US-B2- 8 640 340

## Description

The present invention concerns a system and method for transporting a wind turbine tower and, in particular, an offshore wind turbine tower for a wind turbine generator. The present invention particularly concerns an integrated logistic system and method for fabrication, transport and installation of offshore wind turbine towers at an offshore installation site.

In this application, the term "wind turbine tower" refers to the vertical tower which supports the nacelle, the electrical generator and the blades above the foundation. The term "wind turbine generator" is used to refer to the whole wind turbine assembly, including the tower, blades, nacelle and the electrical generator. The term "foundation" is used to refer to the structure which supports the wind turbine tower, including the body which extends into the seabed, such as a monopile or jacket or floating foundation, as well as, if present, any intermediate transition piece used to connect the tower.

The offshore wind turbine industry stems from earlier developments in onshore wind turbine technology. As such, many incumbent manufacturers within the supply chain were originally focussed on the onshore market, but now also supply parts for offshore applications. In particular, it is common for a wind turbine tower manufacturer to be based inland and manufacture towers for both onshore and offshore applications.

The wind turbine towers are relatively complex in that not only do they perform a structural role in supporting the nacelle in an elevated position, but also they house and support other components, for example secondary structures such as ladders, doorways, and internal elevators, as well as electrical parts and wiring. For example, the wind turbine tower may house the generator's switchgear for allowing isolation of the generator for servicing purposes. At the same time, wind turbine towers are usually manufactured in multiple sections, rather than as a single complete assembly. This requirement to split the tower into sections arises due to the geometric constraints of the tower fabrication facility, as well as the geometric and weight constraints for transporting towers by road.

At the port, a crane is then normally used to lift each tower section onto the deck of a transport vessel for transportation to a pre-assembly or staging harbour, which is located nearer to the installation site. At the pre-assembly harbour, a large crane is used to stack the tower sections into a vertically stacked assembly on a temporary foundation, after which the sections can be bolted together. From here, the assembled tower is then lifted by the crane of a jack-up vessel onto the jack-up vessel's deck. Once loaded, the jack-up vessel is then used to transport the assembled tower to the installation site, at which the jack-up vessel's crane will lift the tower onto the transition piece of a pre-installed foundation.

As larger wind turbines have been developed, the above transport process has, however, raised new issues. Firstly, transporting the tower sections by road limits the maximum tower diameter to around 6.5m, which in turn limits the tower's maximum size. As such, fabricating wind turbine generators with larger towers will likely need tower manufacturers with quayside access. Furthermore, as the offshore wind industry expands into new markets, it is likely that new tower manufacturer facilities will be established. These upcoming changes in the tower supply chain therefore present an opportunity to rethink the tower manufacturing and logistic process. For example, with the conventional approach described above, some harbour locations have traditionally been unsuitable as pre-assembly harbours because they are set behind bridges which limit the vertical height of assembled towers that can be transported away from them.

Furthermore, the conventional requirement to use a harbour for pre-assembly of tower sections represents a significant expense. Firstly, pre-assembly harbour leasing costs are high, not least because it is necessary to have a crane which is capable of lifting large loads more than 100m high, with assembled towers soon to have expected weights of more than 600 tons and being more than 100m tall. Furthermore, the quayside must have sufficient load bearing capacity to support such loads, which restricts the harbours that can act as a staging location.

GB 2 407 114 A discloses a method of installing an offshore wind turbine. US 2020/023923 A1 discloses an offshore structure comprising an upending device for upending an elongate support structure from a substantially horizontal loading position on a deck of the offshore structure to a substantially vertical launch position outboard of the offshore structure. EP 3 090 171 A1 discloses methods for storing and/or transporting a plurality of objects for one or more wind turbines, and a method for storing and/or transporting a plurality of objects. US 8 640 340 B2 discloses installation vessels and methods for offshore wind turbine installation. US 2011/123274 A1 discloses a method and vessel for erecting a wind turbine on an offshore site. WO 2019/103611 A2 discloses a method for installation of a pylon section of an off shore wind turbine and a jack-up vessel for performing such a method.

Accordingly, there is a need for an integrated logistic concept for fabrication, transport and installation of larger next-generation towers that addresses the above issues.

According to a first aspect of the present invention, there is provided a system for transporting a wind turbine tower, the system comprising: a vessel for transporting one or more of the towers to an installation site; a cradle for securing the one or more towers in a horizontal orientation on the vessel during transportation; and an upending device for transitioning the one or more towers from the horizontal orientation to a vertical orientation for subsequent installation to a foundation at the installation site, wherein the upending device comprises a pivot tool for receiving the lower end of one of the towers and a separate lifting device connectable to a crane for fitting to the upper end of the tower for upending and lifting the top end of the tower about the lower end when connected to the pivot tool.

In this way, as towers can be transported horizontally, they may be manufactured and transported in longer sections. At the same time, the towers may be rolled onto a transport vessel, which avoids the need for large cranes at this stage, and may also reduce the quayside load requirements. The manufacturing facility or storage area can also be distanced from the quayside because the towers can be transported via SPMTs. These factors thereby reduce harbour leasing costs and may remove the need for a pre-assembly harbour altogether. In addition, installation or jack-up vessel costs may also be minimised because lower cost and faster transport vessels can be used to transport the towers to the installation site.

Furthermore, as mentioned above, wind turbine towers traditionally also contain electrical equipment such as switchgear, which may need to be transported vertically to avoid damage. However, newer wind turbine models and some foundation designs, will often have electrical equipment housed either in the nacelle or in the foundation. As such, the towers contain less sophisticated electrical equipment, thereby mitigating the risk of damage during horizontal transportation.

Moreover, the present invention allows for the manufacture and transportation of a tower in a single horizontal section. This could thereby save significant preassembly costs. In addition, fabrication costs for a single section, such as a single fully-welded cylinder, would also be lower. For example, the flanges and bolts otherwise used to connect tower sections represent not only a significant capital expense, but also add to the operating expenditure due to the need for later inspection and maintenance of these connections.

According to the invention, the lifting device is connectable to a crane for lifting the tower from its upper end.

In embodiments, the crane is provided on one of a jack-up vessel or a DP heavy lift vessel.

In embodiments, the system further comprises one or more transporters (SPMTs) for supporting one of the one or more towers in a horizontal orientation and for loading and moving the supported tower onto the vessel.

In embodiments, the system may involve two vessels working in a 'feeder configuration'. In this configuration, one vessel may be used for transport, such as a barge or a self-propelled transport vessel, and the other vessel may be used for upending and installation, such as a jackup or a DP heavy lift vessel. In alternative embodiments, the system may involve a single vessel working in a 'direct pick up configuration'. In such a case, a jackup or a DP heavy lift vessel may be used to both transport and subsequently upend and install the towers.

In embodiments, the lifting device comprises an engagement part for engagement with a flange on the upper end of the tower.

In embodiments, the upending device may further comprise a motion compensating device for compensating for movement of the vessel when the tower is being transitioned to a vertical orientation.

In embodiments, the cradle is a multi-purpose frame for supporting the one or more towers during onshore storage, load-out, and on the vessel during transportation.

According to a second aspect of the present invention, there is provided a method for transporting a wind turbine tower, the method comprising: securing the one or more towers to a cradle on a vessel, the cradle being configured to support the towers in a horizontal orientation; transporting the towers using the vessel to an installation site; and transitioning, using an upending device, the one or more towers from the horizontal orientation to a vertical orientation for subsequent installation to a foundation at the installation site, wherein the step of transitioning using an upending device comprises receiving the lower end of a tower into a pivot tool; fitting a separate lifting tool connectable to a crane to a top end of the tower; connecting the lifting tool to a crane for lifting the top end of the tower; and upending the tower by lifting the upper end about the lower end. In this way, a methodology for the loading-out, offshore transport and installation of a wind turbine may be provided. For example, in embodiments, the one or more wind turbine towers may be loaded-out via SPMTs.

In embodiments, the method further comprises supporting one of the one or more towers in a horizontal orientation using a plurality of transporters (SPMTs); and moving and loading out the supported tower onto the vessel.

In embodiments, the method further comprises connecting the lifting device to a crane for upending and lifting the tower from its upper end.

In embodiments, the crane is provided on one of a jack-up vessel or a DP heavy lift vessel.

In embodiments, the system may involve two vessels working in a 'feeder configuration'. In this configuration, one vessel may be used for transport, for example a barge or a self-propelled transport vessel, and the other vessel may be used for upending and installation, such as a jackup or a DP heavy lift vessel.

In an alternative method, a single vessel working in 'direct pick up configuration' may be used. In this configuration, the installation vessel may be used to load-out horizontal towers from the load-out harbour. This includes two scenarios:
1. The vessel then transports the towers horizontally to the installation site, before upending and installing them; and
2. The vessel upends the towers at the load-out harbour, transports them vertically on the deck to the installation site and then installs them.
In embodiments, the installation vessel in either scenario above may be either be a jack-up or a DP heavy lift vessel.

In embodiments, the step of attaching the top end of the tower to a lifting device comprises engaging an engagement tool on the lifting device with a flange on the tower.

Illustrative embodiments of the present invention will now be described with reference to the accompanying drawings in which:
Figure 1 shows wind turbine towers being loaded onto a transport vessel according to a first embodiment of the present invention;
Figure 2 shows a wind turbine tower being upended by an installation vessel according to the first embodiment;
Figure 3 shows an upending bucket for use in a second embodiment;
Figure 4 shows a lifting tool for use in the second embodiment; and
Figure 5 shows the lifting tool of Figure 4 through a lifting sequence.

Embodiments of the present invention allow transport of taller sections of wind turbine towers and consequently, may allow a wind turbine tower manufacturer to manufacture the wind turbine tower as a single welded item for installation directly onto the foundation. Nevertheless, the invention may also be used with the conventional practice of manufacturing the tower in a number of sections which are then assembled. Advantages of manufacturing the tower as a single section include avoiding the need for intermediate flanges and bolts, reducing sea-fastening costs, and improving logistics by opening up new harbours behind bridges and increasing feeder vessel stability. However, fabrication of single section towers would require much longer manufacturing and storage space and hence manufacturing in a plurality of sections for quayside assembly may be necessary in some circumstances. In this case, the tower sections would be assembled horizontally (in contrast to the conventional vertical assembly method) and each section may be provided with a flange to facilitate connection to an adjacent section using bolts. Alternatively, flanges without bolt holes may be provided for welding to adjacent sections. In both instances, the flanges may help to improve the cross-sectional rigidity of the tower sections during transport and upending. It is also possible that flanges are not required structurally and that a conventional welded connection may suffice.

The wind turbine tower may be manufactured at a manufacturing facility located inland or near to a port. Fabrication at a water-side facility is preferable because it avoids the need for road transportation and hence allows larger towers to be fabricated. Once manufactured, the wind turbine tower is loaded onto a transport vessel in a horizontal, rather than vertical orientation. This is achieved by providing the vessel's deck with a horizontal support cradle for supporting each wind turbine tower section along its vertical axis, thereby spreading the load. The transport vessel may be a transport barge or ship, although a jack-up vessel or DP heavy lift vessel may also be used. In embodiments, more than one different type of transport vessel may be used.

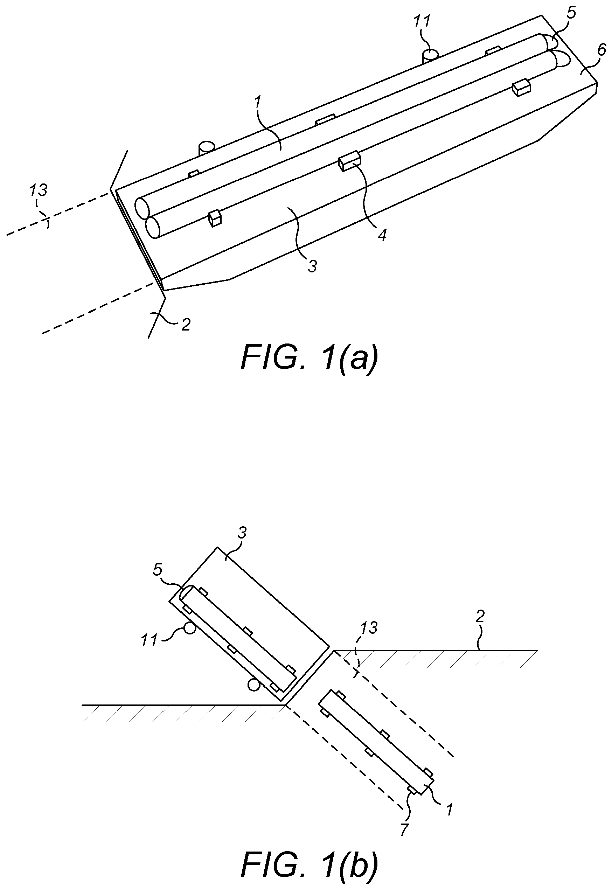

Figure 1 shows wind turbine towers 1 being loaded onto a transport vessel 6 according to a first embodiment. In this example, only two towers 1 are shown, although in practice three or more towers would be loaded per transport vessel 6. Alternatively, a single tower 1 may be loaded, along with a nacelle and a set of three blades. In this embodiment, each wind turbine tower 1 is provided as single pre-welded body which, when installed, forms a tower in its entirety. The transport vessel 6 is a barge 6.

The barge 6 is docked at a quayside 2 adjacent to a ramp 13, which is set at 45 degrees to the quay. However, it will be understood that different ramp configurations may be used, for example the ramp may be set at 90 degrees, depending on the harbour. In this embodiment, two mooring dolphins 11 are shown to facilitate the mooring of the barge 6. Each wind turbine tower 1 is loaded onto the barge's loading bed or deck 3 using a plurality of self-propelled modular transporters (SPMTs) 7, as shown in Figure 1(b). In this example, six SPMTs 7 are provided, distributed along the wind turbine tower's vertical axis. In other embodiments, different numbers of SPMTs 7 may be used. As shown in Figure 1(b), the SPMTs 7 are operated in unison to move the horizontally loaded tower 1 to the edge of the quayside 2 and then onto the aft of the adjacent deck 3 via the ramp 13. As such, the tower 1 may be effectively rolled onto the barge 6. In alternative embodiments, a crane may be used to lift the towers onto the barge 6 or other transport vessel.

As shown in Figure 1(a), once on the vessel deck 3, the tower 1 can be lowered into a cradle 4 for supporting the tower along its longitudinal axis when in the horizontal orientation. In this embodiment, the end of the tower 1 which forms the bottom of the tower once installed is fitted into an upending hinge 5, as will be described in further detail later. The tower 1 may then be further secured using sea-fastening (if required) for transport out to the installation site. Advantageously, the horizontal transport of the towers 1 provides improved vessel stability compared to vertical transport.

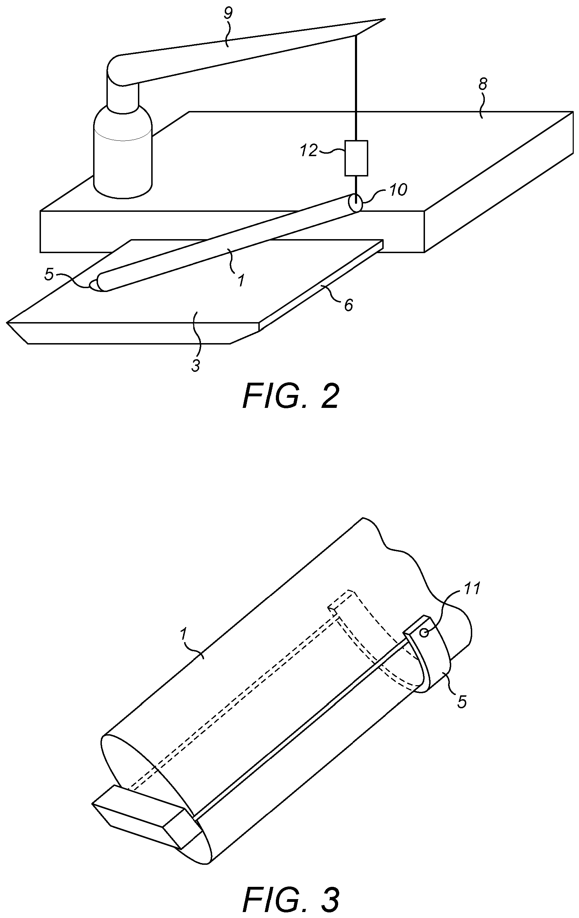

Figure 2 shows the barge 6 once it has reached the installation site. The installation vessel 8 may locate itself at the installation site in preparation, and then be fed towers 1 by the barge 6. The same barge may also be used to 'feed' nacelles and blades to the installation vessel 8. The installation vessel 6 will typically be a jack-up vessel, although for simplicity only a section of the vessel is shown in Figure 2.

The barge 6 is positioned adjacent to the installation vessel 8 to allow it to be accessed by the installation vessel's crane 9. A tower 1 is selected for installation and the crane 9 is attached, using a lifting tool 10, to the top end of the tower. As mentioned above, the lower end of the tower 1 is fitted into the upending hinge 5 which provides a pivot about which the tower 1 may be pivoted. In this embodiment, the upending hinge 5 is provided in the form of a gimbal, but other design concepts are possible to achieve the same function.

In this embodiment, a motion compensation device 12 is fitted between the crane hook and the tower lifting tool 10 to compensate for the relative movement between the crane 9 and the tower 1 when it is on the barge 6. For example, there is a risk of shock loads being applied to the crane 9, or the crane's wire being pulled too far off-vertical as the barge 6 moves in the water. In embodiments, the motion compensation device may be provided as an active or passive heave compensator.

Once the lifting tool 10 is attached, the crane 9 may then lift the end of the tower attached thereto and slew sideways until the tower 1 is vertical above the pivot, thereby upending the tower 1 from its horizontal orientation to a vertical orientation. In an alternative embodiment, the crane boom may be kept stationary, while the transport vessel 6 is moved sideways. Once this transition is complete, the tower 1 is held vertically by the crane 9 from where it may then be lifted clear of the transport vessel 6 and onto the pre-installed foundation.

Figure 3 shows an alternative upending hinge 5 for use in a second embodiment. In this case, a bucket arrangement is used as an alternative to the gimbal shown in Figures 1 and 2. The tower 1 is received into the bucket arrangement, which has a pivot bearing 11 connected to a frame (not shown) about which the tower 1 can be pivoted during its transition to a vertical orientation. In embodiments employing this arrangement, for example, the upending hinge 5 may allow the tower to be pivoted over the edge of the vessel, thereby minimising the crane's lift height relative to the transport deck 3. It will also be understood that, rather than providing an upending device for each tower 1 stored in the support cradle 4, a single upending device 5 may be provided on the vessel, with towers 1 being individually loaded into the device before each upending operation.

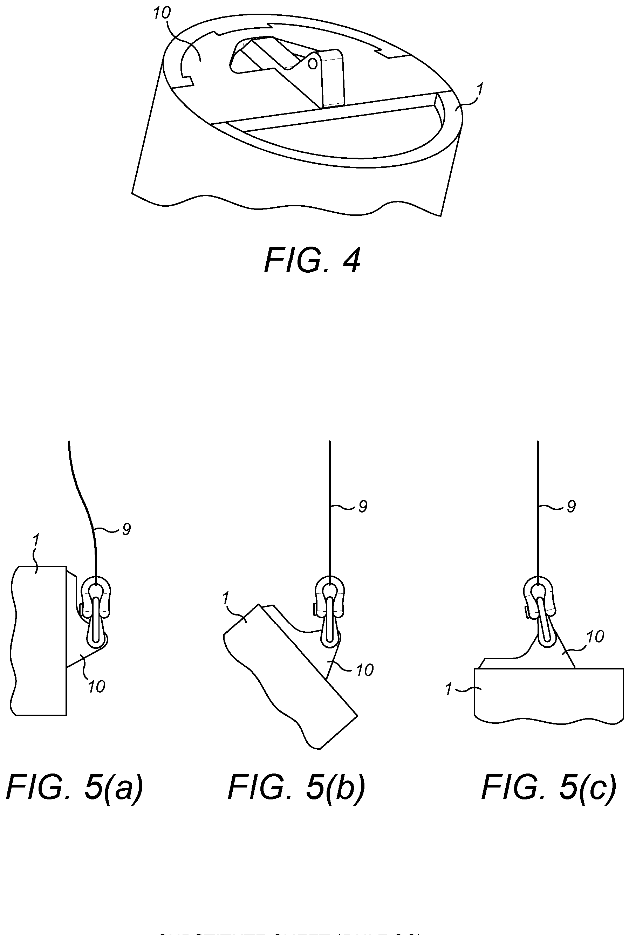

Figure 4 shows an example lifting tool 10 for use in the second embodiment. As shown, the lifting tool 10 fits into the top end of the tower 1 and is operable to key into an internally projecting flange provided at the end of the tower 1.

Figure 5 shows the lifting tool 10 of Figure 4 through a lifting sequence. As shown in Figure 5(a), the lifting tool 10 is fitted to the end of the tower 1 when it is in its horizontal configuration and locked into place by operation of a keying mechanism. The crane 9 may then lift the lifting tool 10 vertically to pivot the tower 1 about the upending bucket 5, as shown in Figure 5(b). This process continues until the tower 1 reaches the vertical orientation shown in Figure 5(c).

Accordingly, with embodiments of the invention, as the towers are transported horizontally, they may be manufactured in longer sections. At the same time, the towers may be rolled onto a transport vessel, which avoids the need for large cranes at this stage, and may also reduce the quayside load requirements. The manufacturing facility or storage area can also be distanced from the quayside because the towers can be transported via SPMTs. These factors thereby reduce harbour leasing costs. In addition, installation or jack-up vessel costs may also be minimised because lower cost and faster transport vessels can be used to transport the tower sections to the installation site.

Furthermore, embodiments of the invention may potentially remove the need for a preassembly harbour entirely. For example, the manufactured towers may be shipped direct from the manufacturing site to the installation site, which may provide for significant cost savings by reducing harbor leasing costs.

Moreover, it should be noted that transporting conventional towers using a conventional feeder configuration is a very slow process. Specifically, it is typically necessary to transport the tower to the installation vessel in three separate tower sections. This is because transporting an assembled vertical tower would excessively compromise transport barge stability, and the motion of the barge in the water would also make it challenging to lift the top of an assembled tower using the installation vessel crane. At the installation site, the installation jackup vessel is then required to lift each section individually onto the jackup deck, after which the vessel must elevate itself higher using the jackup legs in order to lift the tower sections across to the foundation. By contrast, embodiments of the invention may allow a fully welded horizontal tower to be upended and lifted by the jackup vessel onto the foundation in a single step. This thereby has the potential to significantly improve installation speeds, which in turn reduces vessel and harbor leasing costs.

It will be understood that the embodiments illustrated above show applications of the invention only for the purposes of illustration. In practice the invention may be applied to many different configurations, the detailed embodiments being straightforward for those skilled in the art to implement.

For example, although in the above examples, the tower is fabricated as a single welded cylinder, the tower may instead also be assembled from a plurality of sections. For example, this might be required if the tower fabrication hall is not long enough to produce a single-piece welded tower. In this scenario, in embodiments of the invention, the tower sections may be assembled horizontally by aligning the sections on a horizontal assembly jig, prior to the assembly being loaded onto a vessel for transport to the marshalling harbor or installation site (with horizontal securing of tower sections being performed by bolting, or welding, or some other means).

Furthermore, although in the above example, the towers are transported to the installation site using a barge or transport vessel, they may also be transported using the installation vessel itself (which could be either a jackup vessel or DP heavy lift vessel). In such a scenario, the towers may be loaded-out to the installation vessel, for example by using the installation vessel's own crane to lift the towers onto its deck at the load-out harbour. In this case, a number of towers may be loaded horizontally onto the installation vessel, transported to the installation site and then upended in turn at each installation position. Alternatively, the installation vessel could upend the towers at the load-out harbour, transport them vertically on deck to the installation site and then install them as normal.

Moreover, in the above example, the towers are carried on the vessel in a longitudinal configuration. However, it will be understood that the towers may also be loaded onto the vessel's deck transversely. In this scenario, the ends of the towers would extend beyond the sides of the vessel, which may increase the number of towers that can be transported at any one time. Capacity may also be increased by stacking the towers 1 during transportation. For example, the design of the support cradle 4 may be developed into a multi-layered transport cradle capable of carrying two or more towers 1 at a time. In such a case, a single upending device may be provided on the vessel, with stored individual towers 1 being lifted in their horizontal orientation from the cradle 4 and loaded into the upending device for each upending operation.

Furthermore, in the above example, the towers are upended by a jackup vessel. However, it would also be possible in principle for the towers to be upended and installed by a dynamically positioned heavy lift vessel (DP HLV). Like the jackup, this vessel could either work in 'feeder configuration' (where a barge or transport vessel brings the towers to the installation vessel, which is positioned at the installation site), or in 'direct pick up configuration' (where the DP heavy lift vessel itself picks up the towers from the load-out harbor, transports them to the installation site and then installs them. This could include either upending the towers at the load-out harbour and transporting them vertically on deck, or else loading and transporting them horizontally and then upending them at each installation position).

Moreover, although in the above illustrative example, the motion compensation device was provided between the crane hook and the tower lifting tool, it will also be understood that a motion compensation device may further be provided between the tower upending pivot and the transport vessel, for instance in the form of a motion compensation platform.

Related to the above, there is also a risk that movement of the transport vessel could lead to the tower being hit by the vessel before it is fully lifted away. This may be addressed by a motion compensation device between the crane hook and tower lifting tool that provides a quick lift function i.e. to increase the rate of the initial lift off the vessel.

Further, it is also envisaged that a transport cradle may be provided for moving the towers onto a transport vessel using the SPMTs. In embodiments, this cradle may be provided as a multi-purpose frame for supporting the towers during onshore storage, load-out on the SPMTs, and offshore transport. Alternatively, different cradles may be used for different stages, with the towers being transferred between different cradles at the start of each stage.

## Claims

1. A system for transporting a wind turbine tower (1), the system comprising:
a vessel (6) for transporting one or more of the towers (1) to an installation site;
a cradle (4) for securing the one or more towers (1) in a horizontal orientation on the vessel (6) during transportation; and
an upending device (5,10) for transitioning the one or more towers (1) from the horizontal orientation to a vertical orientation for subsequent installation to a foundation at the installation site,
wherein the upending device (5,10) comprises a pivot tool (5) for receiving the lower end of each tower (1) and a separate lifting tool (10) connectable to a crane (9) for fitting to the top end of that tower (1) for upending and lifting the top end of the tower (1) when connected to the pivot tool (5).

2. A system according to the preceding claim, further comprising one or more transporters (7), SPMTs, for supporting one of the one or more towers (1) in a horizontal orientation and for loading the supported tower (1) onto the vessel (6).

3. A system according to any preceding claim, wherein a first vessel (6) is used for transporting the one or more towers to an installation site and the upending device is provided on a second vessel (8).

4. A system according to any preceding claim, wherein the upending device (5,10) further comprises a motion compensating device (12) for compensating for movement of the vessel (6) when the tower (1) is being transitioned to a vertical orientation.

5. A system according to any preceding claim, wherein the cradle (4) is a multi-purpose frame for supporting the one or more towers (1) during onshore storage, load-out, and on the vessel (6) during transportation.

6. A method for transporting a wind turbine tower (1), the method comprising:
securing one or more wind turbine towers (1) to a cradle (4) on a vessel (6), the cradle (4) being configured to support the towers (1) in a horizontal orientation;
transporting the one or more towers (1) using the vessel (6) to an installation site; and
transitioning, using an upending device (5,10), the one or more towers (1) from the horizontal orientation to a vertical orientation for subsequent installation to a foundation at the installation site, wherein the step of transitioning using an upending device (5,10) comprises:
receiving a lower end of a tower (1) into a pivot tool (5);
fitting a separate lifting tool (10) connectable to a crane (9) to a top end of the tower (1);
connecting the lifting tool (10) to a crane (9) for lifting the top end of the tower (1); and
upending the tower (1) by lifting the top end about the lower end.

7. A method according to claim 6, wherein the crane (9) is provided on a jack-up vessel or on a floating heavy-lift vessel.

8. A method according to any one of claim 6 to 7, further comprising the steps of:
supporting one of the towers (1) in a horizontal orientation using one or more transporters (7); and
moving and loading the supported tower (1) onto the vessel (6).

9. A method according to any one of claims 6 to 8, wherein a first vessel (6) is used for transporting the one or more towers (1) to the installation site and wherein a crane (9) for upending the towers (1) is provided on a second vessel (8).

10. A method according to any one of claims 6 to 8, wherein the upending device (5,10) used for transitioning the one or more towers (1) to a vertical orientation is provided on the same vessel (6) used for transporting the one or more towers (1) to the installation site.

11. A method according to any one of claim 6 to 10, wherein the step of attaching the top end of the tower (1) to a lifting device (10), which comprises engaging part of the lifting device (10) with the flange on the tower (1).

## Patentansprüche

1. System zum Transportieren eines Windkraftturms (1), das System umfassend:
ein Schiff (6) zum Transportieren eines oder mehrerer der Türme (1) zu einem Installationsort;
eine Auflagestruktur (4) zum Sichern des einen oder der mehreren Türme (1) in einer horizontalen Ausrichtung auf dem Schiff (6) während des Transports; und
eine Aufrichtvorrichtung (5, 10) zum Überführen des einen oder der mehreren Türme (1) aus der horizontalen Ausrichtung in eine vertikale Ausrichtung zur nachfolgenden Installation auf einem Fundament am Installationsort,
wobei die Aufrichtvorrichtung (5, 10) ein Schwenkwerkzeug (5) zum Aufnehmen des unteren Endes jedes Turms (1) und ein separates Hebewerkzeug (10) umfasst, das mit einem Kran (9) verbindbar ist, um am oberen Ende dieses Turms (1) angebracht zu werden, um das obere Ende des Turms (1) aufzurichten und anzuheben, wenn es mit dem Schwenkwerkzeug (5) verbunden ist.

2. System nach dem vorstehenden Anspruch, ferner umfassend einen oder mehrere Transporter (SPMTs) (7), um einen des einen oder der mehreren Türme (1) in einer horizontalen Ausrichtung zu halten und den abgestützten Turm (1) auf das Schiff (6) zu laden.

3. System nach einem der vorstehenden Ansprüche, wobei ein erstes Schiff (6) zum Transportieren des einen oder der mehreren Türme zu einem Installationsort verwendet wird und die Aufrichtvorrichtung auf einem zweiten Schiff (8) bereitgestellt wird.

4. System nach einem der vorstehenden Ansprüche, wobei die Aufrichtvorrichtung (5,10) ferner ein Bewegungskompensationsgerät (12) umfasst, um eine Bewegung des Schiffs (6) zu kompensieren, wenn der Turm (1) in eine vertikale Ausrichtung überführt wird.

5. System nach einem der vorstehenden Ansprüche, wobei die Auflagestruktur (4) als Mehrzweckrahmen zum Abstützen des einen oder der mehreren Türme (1) während einer Onshore-Lagerung, Verladung und auf dem Schiff (6) während eines Transports dient.

6. Verfahren zum Transportieren eines Windkraftturms (1), das Verfahren umfassend:
Sichern eines oder mehrerer Windkrafttürme (1) an einer Auflagestruktur (4) auf einem Schiff (6), wobei die Auflagestruktur (4) so konfiguriert ist, dass sie die Türme (1) in einer horizontalen Ausrichtung hält;
Transportieren des einen oder der mehreren Türme (1) unter Verwendung eines Schiffs (6) zu einem Installationsort; und
Überführen, unter Verwendung einer Aufrichtvorrichtung (5, 10), des einen oder der mehreren Türme (1) aus der horizontalen Ausrichtung in eine vertikale Ausrichtung zur nachfolgenden Installation auf einem Fundament am Installationsort, wobei der Schritt des Überführens unter Verwendung eines Aufrichtgeräts (5, 10) umfasst:
Aufnehmen eines unteren Endes eines Turms (1) in ein Schwenkwerkzeug (5);
Anbringen eines separaten Hebewerkzeugs (10), das mit einem Kran (9) verbindbar ist, an einem oberen Ende des Turms (1);
Verbinden des Hebewerkzeugs (10) mit einem Kran (9), um das obere Ende des Turms (1) anzuheben; und
Aufstellen des Turms (1) durch Anheben des oberen Endes über das untere Ende.

7. Verfahren nach Anspruch 6, wobei der Kran (9) auf einem Einrichterschiff oder an einem Schwerlastschiff bereitgestellt ist.

8. Verfahren nach einem der Ansprüche 6 bis 7, ferner umfassend die folgenden Schritte:
Stützen eines der Türme (1) in einer horizontalen Ausrichtung unter Verwendung eines oder mehrerer Transporter (7); und
Bewegen und Verladen des abgestützten Turms (1) auf das Schiff (6).

9. Verfahren nach einem der vorstehenden Ansprüche 6 bis 8, wobei ein erstes Schiff (6) für das Transportieren des einen oder der mehreren Türme (1) zu dem Installationsort verwendet wird und wobei ein Kran (9) für das Aufrichten der Türme (1) auf einem zweiten Schiff (8) bereitgestellt wird.

10. Verfahren nach einem der Ansprüche 6 bis 8, wobei die Aufrichtvorrichtung (5, 10), die für das Überführen des einen oder der mehreren Türme (1) in eine vertikale Ausrichtung verwendet wird, auf demselben Schiff (6) bereitgestellt ist, das zum Transportieren des einen oder der mehreren Türme (1) zum Installationsort verwendet wird.

11. Verfahren nach einem der Ansprüche 6 bis 10, wobei der Schritt des Befestigens des oberen Endes des Turms (1) an einem Hebegerät (10), das Ineingriffbringen eines Teils des Hebegeräts (10) mit dem Flansch am Turm (1) umfasst.

## Revendications

1. Système destiné à transporter une tour d'éolienne (1), le système comprenant :
un navire (6) destiné à transporter une ou plusieurs des tours (1) jusqu'à un site d'installation ;
un berceau (4) destiné à arrimer la ou les tours (1) dans une orientation horizontale sur le navire (6) pendant le transport ; et
un dispositif de redressement (5,10) destiné à faire passer la ou les tours (1) de l'orientation horizontale à l'orientation verticale pour une installation ultérieure sur une fondation sur le site d'installation,
dans lequel le dispositif de redressement (5,10) comprend un outil de pivotement (5) destiné à recevoir l'extrémité inférieure de chaque tour (1) et un outil de levage séparé (10) pouvant être relié à une grue (9) destinée à s'adapter à l'extrémité supérieure de cette tour (1) pour redresser et lever l'extrémité supérieure de la tour (1) lorsqu'elle est reliée à l'outil de pivotement (5).

2. Système selon la revendication précédente, comprenant en outre un ou plusieurs transporteurs modulaires autopropulsés (7), SPMT, destinés à supporter l'une parmi la ou des tours (1) dans une orientation horizontale et pour charger la tour supportée (1) sur le navire (6).

3. Système selon une quelconque revendication précédente, dans lequel un premier navire (6) est utilisé pour transporter la ou les tours vers un site d'installation et le dispositif de redressement est situé sur un second navire (8).

4. Système selon une quelconque revendication précédente, dans lequel le dispositif de redressement (5,10) comprend en outre un dispositif de compensation de mouvement (12) destiné à compenser le mouvement du navire (6) lorsque la tour (1) est en transition vers une orientation verticale.

5. Système selon une quelconque revendication précédente, dans lequel le berceau (4) est un cadre polyvalent destiné à supporter la ou les tours (1) pendant le stockage à terre, le déchargement et sur le navire (6) pendant le transport.

6. Procédé destiné à transporter une tour d'éolienne (1), le procédé comprenant :
l'arrimage d'une ou de plusieurs tours d'éolienne (1) à un berceau (4) sur un navire (6), le berceau (4) étant conçu pour supporter les tours (1) dans une orientation horizontale ;
le transport de la ou les tours (1) à l'aide du navire (6) jusqu'à un site d'installation ; et
la transition, à l'aide d'un dispositif de redressement (5,10), de la ou les tours (1) de l'orientation horizontale à l'orientation verticale destinée à une installation ultérieure sur une fondation sur le site d'installation, dans lequel l'étape de transition à l'aide d'un dispositif de redressement (5,10) comprend :
la réception d'une extrémité inférieure d'une tour (1) dans un outil de pivotement (5) ;
l'adaptation d'un outil de levage séparé (10) pouvant être relié à une grue (9) à une extrémité supérieure de la tour (1) ;
la liaison de l'outil de levage (10) à une grue (9) destinée à lever l'extrémité supérieure de la tour (1) ; et
le redressement de la tour (1) en levant l'extrémité supérieure autour de l'extrémité inférieure.

7. Procédé selon la revendication 6, dans lequel la grue (9) est située sur un navire élévateur ou sur un navire de levage lourd flottant.

8. Procédé selon l'une quelconque des revendications 6 à 7 comprenant en outre les étapes suivantes :
le support d'une des tours (1) dans une orientation horizontale à l'aide d'un ou de plusieurs transporteurs (7) ; et
le déplacement et le chargement de la tour supportée (1) sur le navire (6).

9. Procédé selon une quelconque des revendications 6 à 8, dans lequel un premier navire (6) est utilisé pour transporter la ou les tours (1) vers un site d'installation et dans lequel une grue (9) destinée à redresser les tours (1) situées sur un second navire (8).

10. Procédé selon l'une quelconque des revendications 6 à 8, dans lequel le dispositif de redressement (5,10) utilisé pour faire passer la ou les tours (1) à une orientation verticale est situé sur le même navire (6) utilisé pour transporter la ou les tours (1) jusqu'au site d'installation.

11. Procédé selon l'une quelconque des revendications 6 à 10, dans lequel l'étape de fixation de l'extrémité supérieure de la tour (1) à un dispositif de levage (10), qui comprend l'entrée en prise d'une partie du dispositif de levage (10) avec la bride sur la tour (1).
